## Europäisches Patentamt

## European Patent Office

## Office européen des brevets

(19)

(11) Veröffentlichungsnummer: **0 148 341**
**B1**

(12)

# EUROPÄISCHE PATENTSCHRIFT

(45) Veröffentlichungstag der Patentschrift:
08.02.89

(51) Int. Cl.⁴: **A 61 C 9/00**

(21) Anmeldenummer: 84112790.5

(22) Anmeldetag: 24.10.84

(54) Verfahren zum Herstellen eines Abdrucks von einem bezahnten menschlichen Kiefer.

(30) Priorität: 10.12.83 DE 3344774

(43) Veröffentlichungstag der Anmeldung:
17.07.85 Patentblatt 85/29

(45) Bekanntmachung des Hinweises auf die Patenterteilung:
08.02.89 Patentblatt 89/6

(84) Benannte Vertragsstaaten:
AT FR GB IT SE

(56) Entgegenhaltungen:
DE-A- 2 512 443
DE-C- 384 983
GB-A- 789 922

(73) Patentinhaber: Schreinemakers, Josephus, Prof., Oranje Nassaulaan 12, NL-6026 BX Maarheeze (NL)

(72) Erfinder: Schreinemakers, Josephus, Prof., Oranje Nassaulaan 12, NL-6026 BX Maarheeze (NL)

(74) Vertreter: Andrejewski, Walter et al, Patentanwälte Andrejewski, Honke & Partner
Postfach 10 02 54 Theaterplatz 3, D-4300 Essen 1 (DE)

ACTORUM AG

## Beschreibung

Die Erfindung geht aus von einem aus der GB-A-789 922 bekannten Verfahren gemäss Oberbegriff des Anspruches 1.

## Stand der Technik

Es sind Abdrucklöffel bekannt (DE-C-2 754 278, DE-A-1 516 439), mit denen in der Praxis das Verfahren gemäss Oberbegriff des Anspruches 1 durchgeführt wird. Dabei ist nicht festgelegt, mit welchem Abstand der Formmantel an den Seiten die unbeweglichen Schleimhäute umgeben muss. In der Praxis wird mit einem Abstand von mehr als 5 mm, oft bis zu 10 mm, gearbeitet. Der mundvorhofseitige sowie der platinale Rand sind nicht so geformt, dass sie wie eine Dichtlippe funktionieren und beim Aufdrücken des Abdrucklöffels auf die Zahnreihe des Kiefers jenseits der Aktionsgrenze auf die beweglichen Schleimhäute aufgedrückt werden können. Insofern wird gleichsam mit einem offenen Formmantel der Abdruck hergestellt. Es entstehen Bereiche, in denen beim Abdrucknehmen verhältnismässig grosse Volumina der Abdruckmasse mehr oder weniger passiv liegen bleiben, während andere Bereiche des Abdruckes demgegenüber vergleichsweise dünn ausgeformt werden. Das führt zu Nachteilen: Der Abdruck ist häufig im ganzen, d.h. gleichsam makroskopisch betrachtet, nicht hinreichend genau. Er bewirkt darüber hinaus, mikroskopisch betrachtet, keine Präzisionsabbildung der Zähne und der Feinheiten des Kiefers und des Zahnfleisches. Er lässt z.B. Zahnfleischtaschen, topografische Eigenarten der einzelnen Zähne, die Form eingebrachter Inlay-Präparationen und andere feine Strukturen nicht hinreichend genau erkennen. Die mit den bekannten Abdrucklöffeln hergestellten Abdrücke sind sowohl als Oberkieferabdrücke als auch als Unterkieferabdrücke in bezug auf die Präzision verbesserungsbedürftig.

Es sind auch Abdrucklöffel bekannt (GB-A-789 922), bei denen ein Rand bis in die Wangentaschen gedrückt werden kann. Das allein bewirkt keine Verbesserung der Präzision der Abdrücke.

## Aufgabe

Der in den Ansprüchen 1 und 2 angegebenen Erfindung liegt die Aufgabe zugrunde, ein Verfahren anzugeben, mit dem sowohl für den Oberkiefer als auch für den Unterkiefer Abdrücke genommen werden können, die makroskopisch allen Anforderungen genügen und darüber hinaus in mikroskopischer Hinsicht Präzisionsabdrücke darstellen.

## Vorteile

Erfindungsgemäss wird zur Erzielung der erforderlichen makroskopischen Formgebung und mikroskopischen Präzision mit einem hauptsächlich geschlossenen Formraum gearbeitet. Die Abdruckmasse wird beim Abdrucknehmen gleichsam unter Druck gesetzt. Das erreicht die Erfindung dadurch, dass sowohl der mundvorhofseitige Rand als auch der zungenseitige bzw. platinale Rand jenseits der Aktionsgrenze im Bereich der beweglichen Schleimhäute an die beweglichen Schleimhäute jenseits der Aktionslinie angedrückt werden. Wird die Schleimhaut mobilisiert, wird also beispielsweise beim Nehmen des Unterkieferabdruckes der Patient veranlasst, die Zunge vorzustrecken, beim Nehmen des Oberkieferabdruckes der Patient veranlasst, die Oberlippe und die Wangen nach unten zu ziehen, so erfolgt in dem Formraum, der zwischen den Zähnen und dem Kiefer des Patienten und dem erfindungsgemässen Abdrucklöffel gegeben ist, deshalb ein Druckaufbau, weil die beschriebene Mobilisierung der Schleimhäute den genannten Raum abriegelt und infolgedessen die Abdruckmasse wegen der Dichtfunktion der Ränder nur sehr erschwert entweichen kann. Damit wird eine hydraulische Druckerhöhung erzielt und wird die Präzision des Abdruckes erhöht. – Es versteht sich, dass die beschriebenen Ränder eines für das erfindungsgemässe Verfahren einsetzbaren Abdrucklöffels Ausnehmungen aufweisen, für die Schleimhäute über laterale Bänder und Lippenbändchen.

Im folgenden wird die Erfindung anhand einer lediglich ein Ausführungsbeispiel darstellenden Zeichnung ausführlicher erläutert. In den Zeichnungen sind jeweils links zum Stand der Technik gehörende Abdrucklöffel und rechts vergleichbar die für das erfindungsgemässe Verfahren einsetzbaren Abdrucklöffel dargestellt. Dabei zeigen die

Fig. 1a und 1b die Aufsicht auf einen zum Stand der Technik gehörenden (Fig. 1a) sowie auf einen für das erfindungsgemässe Verfahren einsetzbaren Unterkieferabdrucklöffel (Fig. 1b),

Fig. 2a und 2b die Seitenansicht der Gegenstände der Fig. 1a bzw. 1b,

Fig. 3a und 3b einen Schnitt in Richtung A–A durch die Gegenstände der Fig. 1a bzw. 1b,

Fig. 4a und 4b einen Schnitt in Richtung B–B durch die Fig. 1a bzw. 1b,

Fig. 5a und 5b einen Schnitt in Richtung C–C durch den Gegenstand der Fig. 1a, 1b,

Fig. 6a und 6b entsprechend den Fig. 1a und 1b die Darstellung von Oberkieferabdrucklöffeln,

Fig. 7a und 7b eine Seitenansicht des Gegenstandes der Fig. 6a bzw. 6b,

Fig. 8a und 8b einen Schnitt in Richtung D–D durch die Fig. 6a, 6b,

Fig. 9a und 9b die rückwärtige Ansicht der Abdrucklöffel der Fig. 6a, 6b und

Fig. 10a und 10b einen Schnitt in Richtung E–E durch die Fig. 6a, 6b.

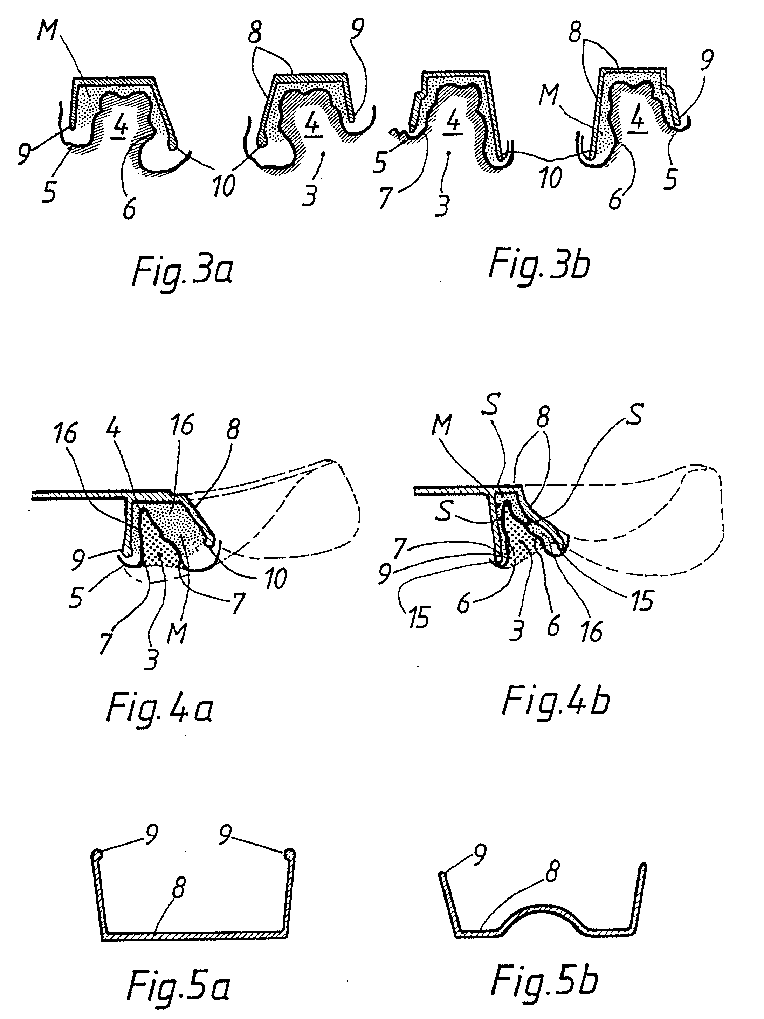

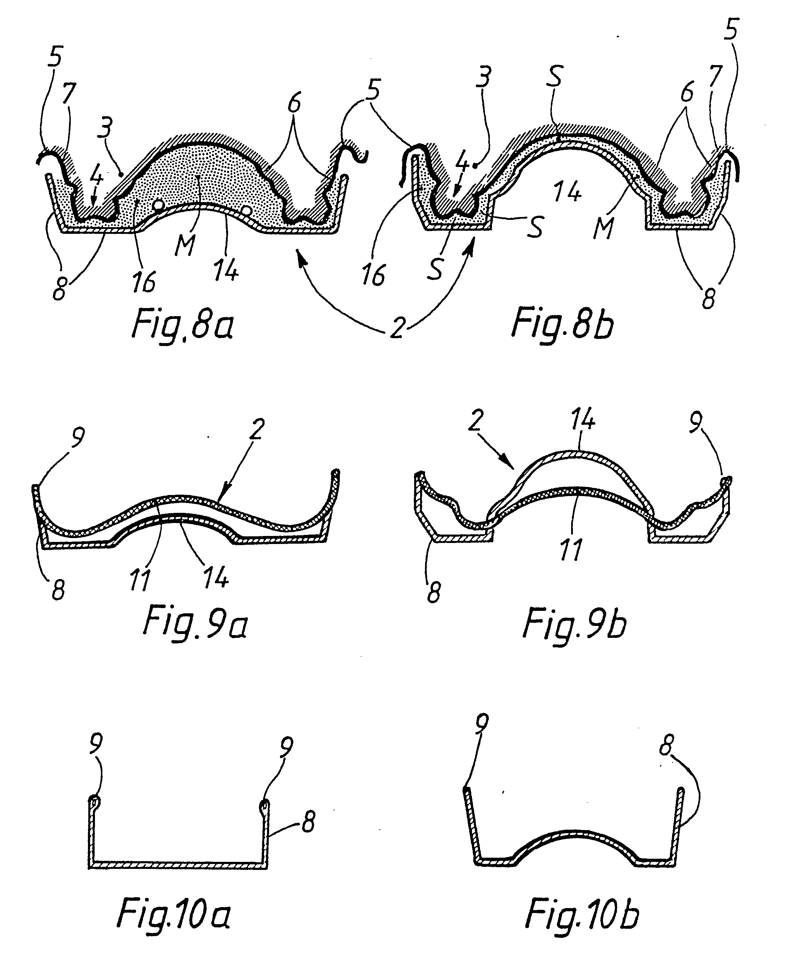

Die in den Figuren dargestellten Abdrucklöffel 1, 2 sind für einen bezahnten menschlichen Kiefer 3 bestimmt. In den Fig. 3a, 3b sowie 4a, 4b und in den Fig. 8a, 8b sind zur Verdeutlichung der Zusammenhänge die Kiefer 3 und die Zahnreihen 4 dargestellt. Jeder Kiefer 3 besitzt eine bewegliche und eine unbewegliche Schleimhaut 5 bzw. 6 sowie eine linienförmige Aktionsgrenze 7 zwischen der beweglichen und der unbeweglichen Schleimhaut 5, 6. Das ist in den vorstehend aufgeführten Figuren, die auch den Kiefer 3 erkennen lassen, angedeutet worden.

Man entnimmt aus den Figuren zunächst, dass der Abdrucklöffel 1, 2 mit einem im Aufriss der U-Form der Zahnreihe 4 des Kiefers 3 folgenden, ausserdem im Bereich der Zahnreihe 4 mit U-förmigem Rinnenquerschnitt versehenem Formmantel 8 besteht. Der Formmantel 8 besitzt einen mundvorhofseitigen Rand 9 sowie einen zungenseitigen oder platinalen Rand 10 bzw. 11. Den zungenseitigen Rand 10 findet man bei dem Unterkieferabdrucklöffel 1, den platinalen Rand 11 bei dem Oberkieferabdrucklöffel 2. Der mundvorhofseitige Rand 9 und der zungenseitige bzw. platinale Rand 10 bzw. 11 enden im Bereich der beweglichen Schleimhäute 5. Beim Abdrucknehmen wird der Formmantel 8 mit einer bekannten Abdruckmasse M ausreichend steifer Konsistenz gefüllt und auf den Kiefer 3 aufgedrückt.

Insbes. aus den Fig. 3a, 3b sowie 8a, 8b entnimmt man, dass der Formmantel 8 mit seinem U-förmigen Rinnenquerschnitt die zugeordnete Zahnreihe 4 sowie die unbeweglichen Schleimhäute 6 mit einem Abstand S von unter 5 mm, vorzugsweise von etwa 1 mm umgibt. Fernerhin ist die Anordnung so getroffen, dass sowohl der mundvorhofseitige Rand 9 als auch der zungenseitige bzw. platinale Rand 10 bzw. 11 jenseits der Aktionsgrenze 7 im Bereich der beweglichen Schleimhäute 5 zumindest bei mobilisierter beweglicher Schleimhaut 5 über die ganze Strecke ihrer Ausdehnung fast ohne Ausnahme (im Ausnahmefall darf über eine kurze Strecke zwischen Rand und Gewebe ein Spalt von z.B. max. 1 mm vorhanden sein) an die bewegliche Schleimhaut 5 als Dichtleiste andrückbar sind. Das zeigen insbes. die Fig. 3b und 8b.

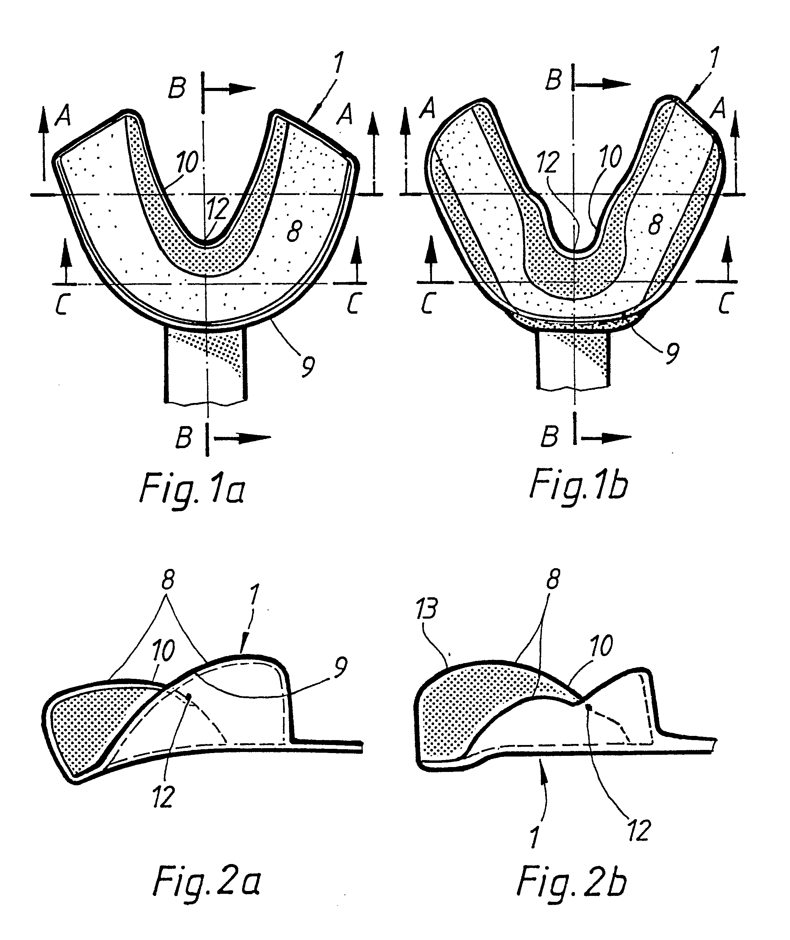

Die Fig. 1b bis 5b zeigen den für das erfindungsgemässe Verfahren einsetzbaren Abdrucklöffel in der Ausführungsform als Unterkieferabdrucklöffel 1. Man erkennt, dass der zungenseitige Rand 10 bei seitlicher Betrachtung des umgekehrt waagerecht gehaltenen Abdrucklöffels 1 (Fig. 2b) von einem mundseitigen tiefsten Bereich 12 beidseits zu einem erhöhten mundrückwärtigen Teil 13 ansteigt.

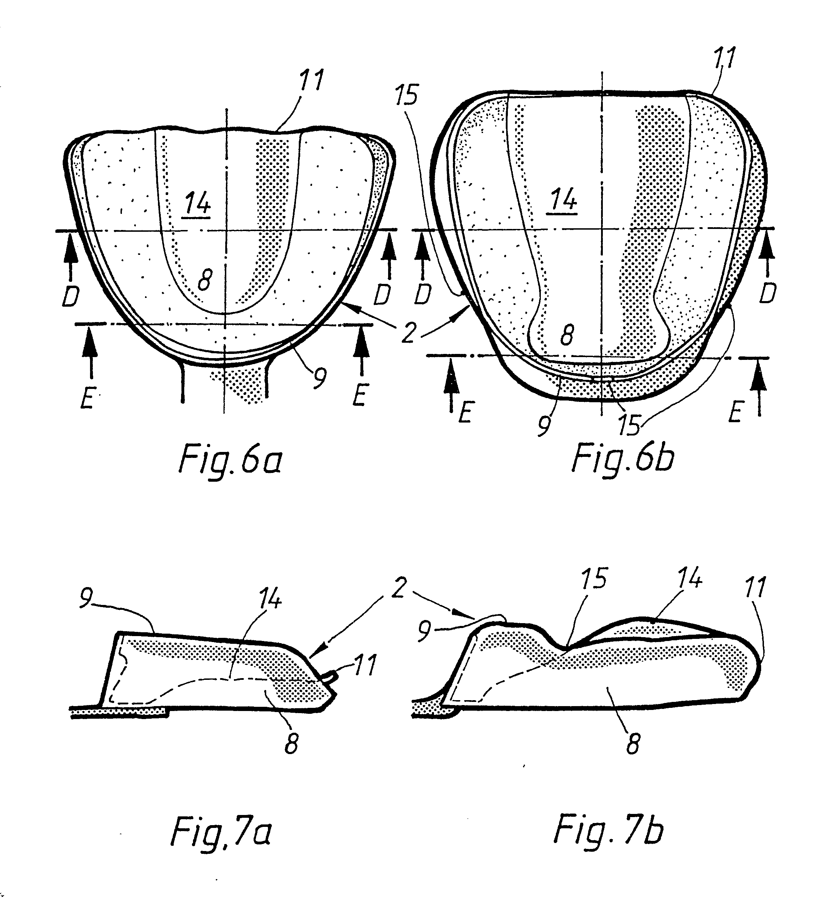

Die Fig. 6b bis 10b zeigen den für das erfindungsgemässe Verfahren einsetzbaren Abdrucklöffel in der Ausführungsform als Oberkieferabdrucklöffel 2 mit Gaumenkuppel 14 und diese begrenzendem platinalen Rand 11. Hier erkennt man, dass die Gaumenkuppel 14 bei seitlicher Betrachtung des waagerecht gehaltenen Abdrucklöffels 2, wie er in Fig. 7b dargestellt ist, dem mundvorhofseitigen Rand 9 um 2 bis 8 mm, im Ausführungsbeispiel maximal um etwa 5 mm übersteigt. – Es versteht sich, dass die beschriebenen Ränder 9, 10, 11 Ausnehmungen 15 für die Bänder aufweisen, die dort Muskeln der Mimichen-Muskulatur mit dem Knochen verbinden.

Die Fig. 3b und 8b, aber auch die Fig. 4b machen deutlich, dass beim Arbeiten mit einem für das erfindungsgemässe Verfahren einsetzbaren Abdrucklöffel 1, 2 nach Massgabe dieses Verfahrens ein geschlossener Formraum 16 entsteht, in dem die Spannung erzeugt werden kann, die für einen Präzisionsdruck erforderlich ist, sei es von vornherein, sei es durch Mobilisierung der an der Dichtleiste anliegenden Bereiche der beweglichen Schleimhäute 5. Grosse Räume, in denen Abdruckmasse M wenig bewegungsintensiv liegen bleiben könnte, fehlen. Demgegenüber entstehen bei der zum Stand der Technik gehörenden Verfahrensweise mit den Abdrucklöffeln 1, 2 solche Räume und ist der Formraum 16 insgesamt offen, wie insbes. die Fig. 3a und 4a bzw. 8a erkennen lassen.

## Patentansprüche

1. Verfahren zum Herstellen eines Abdruckes von einem bezahnten menschlichen Kiefer (3) im Zuge der Herstellung von Zahnersatz für einen Patienten unter Verwendung eines Abdrucklöffels (1 oder 2), der einen im Bereich der Zahnreihe (4) mit U-förmigem Rinnenquerschnitt versehenen Formmantel (8) aufweist, der einen mundvorhofseitigen Rand (9) sowie einen zungenseitigen Rand (10) oder an einer Gaumenkuppel (14) einen platinalen Rand (11) aufweist, bei welchem Verfahren der Formmantel (8) mit einer Abdruckmasse (M) hoher Viskosität gefüllt und auf die Zahnreihe (4) aufgedrückt wird, so dass der mundvorhofseitige Rand (9) und der zungenseitige (10) bzw. platinale Rand (11) jenseits der Aktionsgrenze (7) der beweglichen Schleimhäute (5) an den beweglichen Schleimhäuten (5) des Kiefers (3) enden, dadurch gekennzeichnet, dass der mundvorhofseitige Rand (9) sowie der zungenseitige (10) bzw. der platinale Rand (11) auf die beweglichen Schleimhäute (5) gedrückt werden, dass danach die beweglichen Schleimhäute (5) mobilisiert werden, und dass ein Formmantel (8) verwendet wird, der die zugeordnete Zahnreihe (4) und an den Seiten die unbeweglichen Schleimhäute (6) mit einem Spaltabstand (S) von unter 5 mm umgibt, wenn die Ränder (9, 10, 11) auf die beweglichen Schleimhäute (5) aufgedrückt sind.

2. Verfahren nach Anspruch 1, dadurch gekennzeichnet, dass ein Formmantel (8) verwendet wird, der die zugeordnete Zahnreihe (4) und an den Seiten die unbeweglichen Schleimhäute (6) mit einem Spaltabstand (S) von etwa 1 mm umgibt.

## Claims

1. A process for the production of an impression of a human jaw (3) with teeth in the course of production of a denture for a patient, using an impression tray (1 or 2) that possesses in the area of the row of teeth (4) a moulding jacket (8) provided with a U-shaped channel section that has a flange (9) on the oral cavity side and also a flange (10) on the lingual side, or a palate flange (11) to a palate dome (14), in which process the moulding jacket (8) is filled with an impression material (M) of high viscosity and is pressed against the row of teeth (4), so that the flange (9) on the oral cavity side and the flange (10) on the lingual side or the palate flange (11) end of the mobile mucous membranes (5) of the jaw (3) beyond the action boundary (7) of the mobile mucous membranes (5) characterized in that the flange (9) on the oral cavity side and also the flange (10) on the lingual side or the palate flange (11) are pressed against the mobile mucous membranes (5), that subsequently the mobile mucous membranes (5) are made to move, and that a moulding jacket (8) is used that surrounds the associated row of teeth (4) and the immobile mucous membranes (6) at the sides with a spacing distance (S) of less than 5 mm when the flanges (9, 10, 11) are pressed against the mobile mucous membranes (5).

2. A process according to Claim 1, characterized in that a moulding jacket (8) is used that surrounds the associated row of teeth (4) and the immobile mucous membranes (6) at the sides, with a spacing distance (S) of about 1 mm.

**Revendications**

1. Procédé pour fabriquer une empreinte d'une mâchoire humaine pourvue de dents, lors de la fabrication d'un dentier pour un patient moyennant l'utilisation d'un porte-empreinte (1 ou 2), qui possède un moule conformé (8) comportant, au voisinage de la denture (4), une section transversale en forme de gouttière en U, et possédant un bord (9) situé du côté de la cavité buccale ainsi qu'un bord (10), situé du côté de la langue ou, au niveau de la voûte du palais (14), un bord palatin (11), et selon lequel on remplit le moule conformé (8) avec une masse (M) pour empreinte présentant une viscosité élevée et on l'applique sous pression sur la denture (4), de sorte que le bord (9) situé du côté de la cavité buccale et le bord (10) situé du côté de la langue ou le bord palatin (11) se terminent, au-delà de la limite d'action (7) des muqueuses mobiles (5) de la mâchoire (3), au voisinage de ces muqueuses, caractérisé en ce qu'on repousse le bord (9) situé du côté de la cavité buccale ainsi que le bord (10) situé du côté de la langue ou le bord palatin (11) sur les muqueuses mobiles (5), qu'on mobilise ensuite les muqueuses mobiles (5) et qu'on utilise un moule conformé (8), qui entoure la denture (4) associée et, sur les côtés, les muqueuses immobiles (6), en laissant subsister un intervalle de séparation (S) inférieur à 5 mm, lorsque les bords (9, 10, 11) sont repoussés sur les muqueuses mobiles (5).

2. Procédé selon la revendication 1, caractérisé en ce qu'on utilise un moule conformé (8), qui entoure la denture (4) associée et, sur les côtés, les muqueuses immobiles (6) en laissant subsister un espace de séparation (S) égal à environ 1 mm.

EP 0 148 341 B1

Fig.1a

Fig.1b

Fig.2a

Fig.2b

Fig. 3a

Fig. 3b

Fig. 4a

Fig. 4b

Fig. 5a

Fig. 5b

7

Fig.6a

Fig.6b

Fig.7a

Fig.7b

Fig.8a

Fig.8b

Fig.9a

Fig.9b

Fig.10a

Fig.10b